# EUROPÄISCHE PATENTSCHRIFT

(11) **EP 1 698 525 B1**
(45) Veröffentlichungstag und Bekanntmachung des Hinweises auf die Patenterteilung: **17.12.2008**
(21) Anmeldenummer: 06004409.6
(22) Anmeldetag: 03.03.2006
(51) Int. Cl.: B60R 21/20

(54) **Fahrzeugtürverkleidung und Verfahren zu deren Herstellung**
Vehicle side door cladding and method of manufacture for the same
Panneau de revêtement d'une porte de véhicule et la méthode de production

(30) Priorität: 04.03.2005 DE 102005010024
(43) Veröffentlichungstag der Anmeldung: 06.09.2006
(73) Patentinhaber: Lisa Dräxlmaier GmbH, 84137 Vilsbiburg (DE)
(72) Erfinder: Riester, Christoph, 85445 Aufkirchen (DE); Dax, Michael, 84169 Altfraunhofen (DE); Graf, Friedrich, 84307 Eggenfelden (DE); Lehmann, Lutz, 84030 Ergolding (DE); Sigl, Georg, 94424 Arnstorf (DE); Sieber, Marc, 84028 Landshut (DE); Sperl, Thomas, 94405 Landau/Isar (DE)
(74) Vertreter: HOFFMANN EITLE

(56) Entgegenhaltungen:
- EP-A- 1 445 156
- WO-A-20/04087473
- FR-A- 2 792 271
- US-A- 5 868 420
- US-B1- 6 325 410

## Beschreibung

### Gebiet der Erfindung

Die Erfindung betrifft eine Fahrzeugtürverkleidung für ein Kraftfahrzeug mit einer Kopfaufprallschutzeinrichtung sowie ein Verfahren zu deren Herstellung.

Neben Seitenaufprallschutzeinrichtungen, die häufig als Seitenairbag bezeichnet werden und im Falle ihrer sensorgesteuerten Auslösung einen Kraftfahrzeuginsassen vor allen Dingen im Becken- und Thoraxbereich schützen sollen, kommen vermehrt auch Kopfaufprallschutzeinrichtungen in Kraftfahrzeugen zum Einsatz. Derartige Kopfaufprallschutzeinrichtungen werden häufig als Headbag bezeichnet und dienen dazu, einen Fahrzeuginsassen gegen ein Aufprallen des Kopfes auf die Seitenscheibe zu schützen.

Herkömmlicherweise werden Kopfaufprallschutzeinrichtungen im Dachhimmel von Fahrzeugen integriert und umfassen einen oder mehrere Gassäcke, die sich bei Auslösung der Schutzeinrichtung aus dem Dachbereich eines Fahrzeuges entfalten.

Bei Kraftfahrzeugen, bei denen die Unterbringung einer Kopfaufprallschutzeinrichtung im Dachbereich nicht möglich ist, wie bei halboffenen Cabriolets, müssen die Gassäcke bzw. Luftsäcke einer Kopfaufprallschutzeinrichtung in den Bereich der Türseitenverkleidung integriert werden.

### Stand der Technik

Die Innenverkleidung eines üblichen Türaufbaus umfasst eine Armauflage, unter der sich derjenige Bereich befindet, in dem sich häufig eine Ablagetasche befindet. Über der Armauflage befindet sich das sogenannte Mittelfeld der Türverkleidung. Der Übergangsbereich zwischen Mittelfeld und der Oberseite der Türverkleidung, d.h. der Krümmungsbereich zwischen Mittelfeld und dem im Wesentlichen horizontal angeordneten Übergangsbereich der Türverkleidung zur Seitenscheibe wird als Bordkante bezeichnet.

Bei der in der US 5,231,253 dargestellten Lösung wird eine Kopfaufprallschutzeinrichtung dargestellt, die sich nach dem Öffnen des Mittelfelds der Türverkleidung entfaltet und in Bezug auf den verwendeten Gassack ausreichend groß bemessen ist, um auch den Kopf des Fahrzeuginsassen im Falle eines Seitenaufpralls zu schützen.

In der EP 1 445 156 A1 ist eine Seitenaufprallschutzeinrichtung für einen Fahrzeuginsassen beschrieben, bei der ein vorgefertigtes Airbagmodul bestehend aus Gassack mit äußerer Umhüllung, Gaslanze und Druckgasquelle an der Seitenwand der Fahrzeugtür durch Schrauben oder Ähnliches befestigt ist. Bei Auslösung des Airbagmoduls reißt die Fahrzeugtürverkleidung über die gesamte Länge auf, wobei zur Unterstützung dieser Bewegung in der Stirnseite der Verkleidung etwa in Höhe des verschwenkbaren oberen Randbereichs eine definierte Schwächung der Verkleidung vorgesehen ist. Die Schwächung kann hierbei durch mehrere aneinandergesetzte schlitzförmige Öffnungen gebildet sein oder aber eine durchgehende, V-förmige oder halbkreisförmige Einkerbung am Trägerteil der Verkleidung sein.

Eine gattungsgemäße Fahrzeugtürverkleidung ist aus FR-A- 2 792 271 bekannt.

### Darstellung der Erfindung

Der Erfindung liegt die Aufgabe zugrunde, eine Fahrzeugtür für ein Kraftfahrzeug so zu gestalten, dass sich eine für einen Fahrzeuginsassen nicht sichtbare Kopfaufprallschutzeinrichtung integrieren lässt, wobei die Montage der Fahrzeugtür besonders einfach sein soll.

Diese Aufgabe wird durch eine Fahrzeugtürverkleidung für ein Kraftfahrzeug mit den Merkmalen des Anspruchs 1 gelöst. Das Verfahren zur Vormontage einer Fahrzeugtürverkleidung wird durch die Merkmale des Anspruchs 21 beschrieben. Bevorzugte Ausführungsformen folgen aus den übrigen Ansprüchen.

Der Erfindung liegt der Gedanke zugrunde, eine Fahrzeugtürverkleidung für ein Kraftfahrzeug mit einer Kopfaufprallschutzeinrichtung für einen Fahrzeuginsassen zu schaffen, die einen Bordkantenträger, eine Kopfaufprallschutzeinrichtung, eine Schaumschicht über dem Bordkantenträger und einem Airbagträger der Kopfaufprallschutzeinrichtung sowie eine Dekorschicht auf der Schaumschicht umfasst. Die Schaumschicht ist ausreichend elastisch, so dass sie bei Auslösung der Kopfaufprallschutzeinrichtung verformbar ist. Die Kopfaufprallschutzeinrichtung, die im üblichen Sprachgebrauch einem Headbag, nicht aber einem Seitenairbag entspricht, umfasst einen luftdicht mit dem Bordkantenträger verbundenen Airbagträger, einen Luftsack, der randseitig am Airbagträger luftdicht befestigt ist sowie einen Gasgenerator, der fest mit dem Airbagträger verbunden ist. Die Kopfaufprallschutzeinrichtung stellt somit ein Fertigungsmodul dar, bei dem nicht nur der Airbagträger und Luftsack, sondern auch der Gasgenerator bereits als eine Einheit vorgesehen sind. Der Airbagträger ist luftdicht mit dem Bordkantenträger verbunden, d.h. das gesamte Modul ist mit mindestens einem Befestigungsansatz des Bordkantenträgers verbunden. Die Schaumschicht erstreckt sich vollständig über den Bordkantenträger. Der Bordkantenträger umfasst einen Abdeckbereich, der die Kopfaufprallschutzeinrichtung bedeckt. Somit ist eine durchgängige Schaumschicht vorhanden, über die sich nicht die Position des Abdeckbereichs über der Kopfaufprallschutzeinrichtung erkennen lässt. Gleiches gilt für die auf der Schaumschicht auf der dem Borkantenträger abgewandten Seite vorgesehene Dekorschicht. Auch die Dekorschicht ist so gestaltet, dass es für einen Fahrzeuginsassen nicht erkennbar ist, wo sich die in die Fahrzeugtürverkleidung integrierte Kopfaufprallschutzeinrichtung befindet. Eine äußerlich erkennbare Schwächung ist deswegen nicht nötig, weil die biegsame Schaumschicht sich bei Auslösung der Kopfaufprallschutzeinrichtung leicht verformt.

Der einen Teil des Bordkantenträgers bildende Abdeckbereich weist eine Materialschwächung auf, die so gestaltet ist, dass der Abdeckbereich bei Auslösung der Kopfaufprallschutzeinrichtung im Bereich der Materialschwächung aufreißt. Durch die ausreichende Elastizität der mit der Dekorschicht versehenen Schaumschicht ist es somit lediglich erforderlich, den Abdeckbereich als Bestandteil des Bordkantenträgers mit einer gezielten Materialschwächung zu versehen, die als Sollrissstelle im Falle der Entfaltung des Luftsackes dient.

Ein wesentlicher Vorteil der erfindungsgemäßen Fahrzeugtürverkleidung besteht darin, dass diese bereits mit der vormontierten Kopfaufprallschutzeinrichtung bereitgestellt werden kann. Die Fahrzeugtürverkleidung kann somit als Ganzes bei der Türmontage eingesetzt werden. Eine zusätzliche Befestigung des Airbagträgers am Rohbau der Fahrzeugtür ist nur optional und kann zudem bei entsprechender Formgebung, z.B. bei Vorsehen eines hakenförmigen Befestigungsansatzes am Airbagträger, der den Rohbau der Fahrzeugtür oder ein mit diesem verbundenes Bauelement umgreift, ohne einen zusätzlichen Montageschritt erfolgen.

Das Verfahren zur Vormontage einer wie beschriebenen Fahrzeugtürinnenverkleidung umfasst die folgenden Schritte. Zunächst wird die Kopfaufprallschutzeinrichtung am Bordkantenträger befestigt. In einem nachfolgenden Schritt wird eine Haut auf den Bordkantenträger hinterschäumt. Es wird dabei zwischen zwei Formträgern geschäumt, wobei ein Formträger den Bordkantenträger und die andere Form die Dekorschicht trägt.

Alternativ kann anstelle des Hinterschäumens einer Haut auf den Bordkantenträger auch zunächst die Schaumschicht in einer geschlossenen Form erzeugt werden und in einem getrennten, nachfolgenden Schritt die Dekorschicht auf die Schaumschicht aufgebracht, vorzugsweise aufgeklebt oder aufkaschiert werden.

Nach einer bevorzugten Ausführungsform der Erfindung weist die Kopfaufprallschutzeinrichtung mindestens eine Befestigungseinrichtung zum Herstellen einer Verbindung mit dem Rohbau der Fahrzeugtür auf. Hierbei kann es sich nach einer bevorzugten Ausführungsform um einen hakenförmigen Abschnitt des Airbagträgers handeln, der im Montagezustand einen Teil der mit dem Rohbau der Fahrzeugtür verbundenen Türdichtung umgreifen kann. Diese Ausführungsalternative ist besonders vorteilhaft, weil sich die optional gewünschte Verbindung zwischen der Kopfaufprallschutzeinrichtung und dem Rohbau der Fahrzeugtür automatisch bei der Montage der komplett vormontierten Fahrzeugtürverkleidung einstellt. Es ist kein zusätzlicher Arbeitsschritt erforderlich. Alternativ kann aber auch der Airbagträger mit einer Befestigungslasche versehen sein, die mit dem Rohbau der Fahrzeugtür verschraubt wird. In diesem Zusammenhang ist es besonders günstig, dass sich die Kopfaufprallschutzeinrichtung nur im Bereich der Bordkante der Fahrzeugtürverkleidung befindet. Es kann somit zuerst der Bordkantenbereich der Fahrzeugtürverkleidung montiert werden, daraufhin der Airbagträger über die daran angebrachte Lasche mit dem Rohbau der Fahrzeugtür verschraubt werden und erst anschließend die weiteren Hauptbestandteile der Türinnenverkleidung montiert werden, wie Mittelteil, Armauflage und Kartenfach. Alternativ können aber auch eine oder mehrere dieser Komponenten bereits mit dem Bordkantenbereich einstückig verbunden sein und z.B. nur das Mittelfeld der Türverkleidung nachträglich befestigt werden.

Eine derartige Gestaltung kann auch den Vorteil besitzen, dass im Reparaturfall ein leichterer Zugang zu Komponenten im Türaufbau besteht, ohne die gesamte Türverkleidung abnehmen zu müssen.

Nach einer bevorzugten Ausführungsform der Erfindung weist der Airbagträger eine von der Schaumschicht weg gerichtete, gasdicht abgeschlossene erste Kammer auf, in welcher der Gasgenerator angeordnet ist.

Nach einer bevorzugten Ausführungsform der Erfindung stellt die Materialschwächung des Abdeckbereichs eine Aufreißlinie dar, die im Wesentlichen U-förmig ist, wobei die Basis der U-Form in Montageposition im Wesentlichen parallel und nahe zur Seitenscheibe der Fahrzeugtür verläuft, während die beiden Schenkel der U-Form sich von den Endbereichen der Basis der Aufreißlinie und im Wesentlichen senkrecht zur Basis in einer Richtung von der Seitenscheibe weg bis zu den durch die Gesamtgröße der Kopfaufprallschutzeinrichtung vorgegebenen Endpunkten erstrecken. Wie insbesondere auch in der nachfolgenden Figurenbeschreibung deutlich werden wird, ist es allerdings sowohl für die Erstreckung der Kopfaufprallschutzeinrichtung wie auch die damit verbundene Anordnung der Aufreißlinien wesentlich, dass sich diese nur über einen relativ geringen Teil der Gesamtlänge der Fahrzeugtür und auch nur im Bordkantenbereich der Türverkleidung erstrecken.

Durch das Vorsehen einer U-Form lässt sich die Öffnung des Abdeckbereichs steuern und somit die Entfaltungs- und Austrittsrichtung des Luftsackes beeinflussen. Indem die U-Form so angeordnet ist, dass sich der Mittelteil des U, d.h. die Basis der U-Form parallel und nahe zur Seitenscheibe der Fahrzeugtür befindet, folgt, dass sich der Luftsack auch in unmittelbarer Nähe zur Seitenscheibe der Fahrzeugtür und in einer Richtung vom Bordkantenbereich nach oben erstreckt.

Nach einer bevorzugten Ausführungsform der Erfindung umfasst die Fahrzeugtürverkleidung eine weitere gezielte Schwächung der Wandstärke des Abdeckbereichs in einen Bereich, der sich im Wesentlichen zwischen den Endpunkten der Aufreißlinie befindet. Diese weitere gezielte Schwächung der Wandstärke kann so gestaltet sein, dass sie nicht als Aufreißlinie, sondern vielmehr als eine Sollbiegestelle wirkt, die gleichsam als Scharnier die Aufspreizbewegung des Abdeckbereichs im Falle der Auslösung der Kopfaufprallschutzeinrichtung ermöglicht.

Vorzugsweise ist die Materialschwächung werkzeugfallend gebildet, d.h. die Materialschwächung wird bereits im Rahmen der Spritzgussfertigung des Bordkantenträgers gebildet. Wenn es auch möglich ist, die Materialschwächung in einem nachgeschalteten Arbeitsschritt, z.B. mit einer Lasereinrichtung oder durch mechanisches Einkerben einer Nut zu bilden, ist eine im Rahmen der Fertigung des Bordkantenträgers erfolgende Materialschwächung vorzuziehen.

Vorzugsweise ist die Materialschwächung auf der der Schaumschicht abgewandten Seite des Bordkantenträgers gebildet, und zwar als Verringerung der Wandstärke des Bordkantenträgers. Die Position der Materialschwächung auf der der Schaumschicht abgewandten Seite stellt sicher, dass die Kopfaufprallschutzeinrichtung vom Fahrgastinnenraum nicht erkennbar ist, auch nicht nachdem Druck auf die Schaumschicht ausgeübt wurde, wodurch sich eine auf der der Schaumschicht zugewandten Seite des Bordkantenträgers befindliche Materialschwächung abzeichnen könnte.

Vorzugsweise besitzt der einstückig mit dem Bordkantenträger gebildete Abdeckbereich eine Mehrzahl von linienförmigen Materialschwächungsbereichen, die im Wesentlichen parallel zueinander verlaufen. Vorzugsweise verlaufen diese linienförmigen Materialschwächungsbereiche auch im Wesentlichen parallel zur Basis der U-Form. Die zusätzlichen, linienförmigen Materialschwächenbereiche unterstützen die Biegung des Abdeckbereiches im Falle der Auslösung der Kopfaufprallschutzeinrichtung. Durch die Mehrzahl von im Wesentlichen parallel zueinander verlaufenden Materialschwächungsbereichen wird eine lamellenartige Struktur erzeugt, die eine leichte Abwinkelbarkeit der einzelnen streifenförmigen Abschnitte zwischen jeweils zwei Materialschwächungsbereichen zueinander ermöglichen. Durch die Anordnung aber auch in Bezug auf das Ausmaß der Materialschwächung einstellbaren Materialschwächungsbereiche lässt sich die Verformung des Abdeckbereichs unter der beim Aufblasen und Entfalten des Luftsackes wirkenden Druckkraft gezielt einstellen und an die Erfordernisse anpassen.

Alternativ oder aber ergänzend hierzu ist es nach einer weiteren bevorzugten Ausgestaltung der Erfindung möglich, den einstückig mit dem Bordkantenträger gebildeten Abdeckbereich so zu gestalten, dass er eine Materialstärke aufweist, die sich in Richtung auf zumindest einen Teil der Aufreißlinie verringert. Auch diese Maßnahme dient dazu, das Biegeverhalten des Abdeckbereichs unter der typischerweise im Falle der Entfaltung des Luftsackes vorhandenen Druckbeanspruchung vorzugeben.

Bei den vorangehend beschriebenen Ausführungsformen der Erfindung wurde die Materialschwächung des Abdeckbereichs jeweils durch eine gezielte Vorgabe der bereichsweisen Wandstärke des Abdeckbereichs erzeugt. Alternativ ist es aber ebenso möglich, die Materialschwächung dadurch zu bilden, indem mindestens eine im Abdeckbereich vorhandene Verstärkungslage, vorzugsweise aus Gewebe, gezielt angeordnet wird. So kann beispielsweise die Verstärkungslage sich nicht bis in den Bereich der Materialschwächung erstrecken und auf diese Weise ohne eine Änderung der Wandstärke bereits die lokale Festigkeit des Materials des Abdeckbereichs beeinflussen. Das Vorsehen mindestens einer Verstärkungslage ist allerdings nicht nur rein alternativ zu dem Vorsehen einer Materialschwächung in Form einer Wandstärkenverringerung zu sehen. Beide Maßnahmen können gleichzeitig vorgesehen sein und sich in ihrer Wirkung ergänzen.

So ist es beispielsweise auch möglich, mehrere Verstärkungslagen vorzusehen, die im Abdeckbereich umspritzt sind, wobei das Biegeverhalten des Abdeckbereichs durch die gezielte Erstreckung der einzelnen Verstärkungslagen eingestellt ist. Mit anderen Worten, in denjenigen Bereichen des Abdeckbereichs, in dem eine hohe Steifigkeit angestrebt wird, werden mehrere Gewebelagen angeordnet, während in Bereichen mit nur einer einzigen Gewebelage der Abdeckbereich stärker verformbar ist.

Nach einer bevorzugten Ausführungsform der Erfindung weist der Bordkantenträger mindestens zwei, vorzugsweise drei oder vier Befestigungsansätze auf, die sich vom Bordkantenträger ausgehend auf der der Schaumschicht abgewandten Seite befinden. Die Befestigungsansätze können dabei eine Doppelfunktion erfüllen und neben der Anbringung des Moduls der Kopfaufprallschutzeinrichtung auch einen Schusskanal für den Luftsack bilden.

Nach einer bevorzugten Ausführungsform ist die Kopfaufprallschutzeinrichtung so gestaltet, dass sie als vollständige Baueinheit bestehend aus dem Airbagträger, dem Luftsack und dem Gasgenerator in einem einzigen Arbeitsschritt am Bordkantenträger anbringbar ist. Auf diese Weise lässt sich ein hoher Integrationsgrad im Bereich der Türverkleidung erreichen.

Vorzugsweise ist der Airbagträger mit dem Bordkantenträger verschweißt. Das Vorsehen einer Schweißverbindung stellt eine einfache Alternative dar, um eine luftdichte und feste Verbindung zwischen Airbagträger und Bordkantenträger zu schaffen. Als alternatives Fügeverfahren bietet sich das Verkleben von Airbagträger und Bordkantenträger in gleicher Weise an.

Nach einer bevorzugten Ausführungsform der Erfindung besteht die Dekorschicht aus Kunststofffolie. Dabei kann die Kunststofffolie in Bezug auf die gewünschten optischen und haptischen Eigenschaften ausgewählt werden.

Nach einer alternativen, bevorzugten Ausführungsform besteht die Dekorschicht aus Leder, Lederimitat oder Textilmaterial, das auf die Schaumschicht aufgeklebt oder aufgespannt ist. In diesem Fall wird nicht das oben beschriebene Verfahren des Hinterschäumens, sondern des Schäumens in einer geschlossenen Form durchgeführt, woraufhin auf die Schaumschicht die Dekorschicht in einem getrennten, nachgeschalteten Fertigungsschritt aufgebracht wird.

### Kurze Beschreibung der Figuren

Nachfolgend wird die Erfindung rein beispielhaft anhand der beigefügten Figuren beschrieben, in denen
- Fig. 1: eine schematische Darstellung eines Teils einer Fahrzeugtür ist, aus der die prinzipielle Lage der Kopfaufprallschutzeinrichtung hervorgeht;
- Fig. 2: eine horizontale Schnittdarstellung durch den Türaufbau im Bereich des Bordkantenträgers sowie der Kopfaufprallschutzeinrichtung darstellt;
- Fig. 3: der Darstellung nach Fig. 2 während des Auslösens der Kopfaufprallschutzeinrichtung entspricht;
- Fig. 4: eine schematische Detailansicht des Abdeckbereiches des Bordkantenträgers einer alternativen Ausführungsform der Erfindung darstellt; und
- Fig. 5: eine schematische Detailansicht des Abdeckbereiches des Bordkantenträgers nach einer weiteren alternativen Ausführungsform der Erfindung darstellt.

### Wege zur Ausführung der Erfindung

In den nachfolgenden Figuren werden jeweils identische oder einander entsprechende Bauelemente mit denselben Referenzziffern bezeichnet.

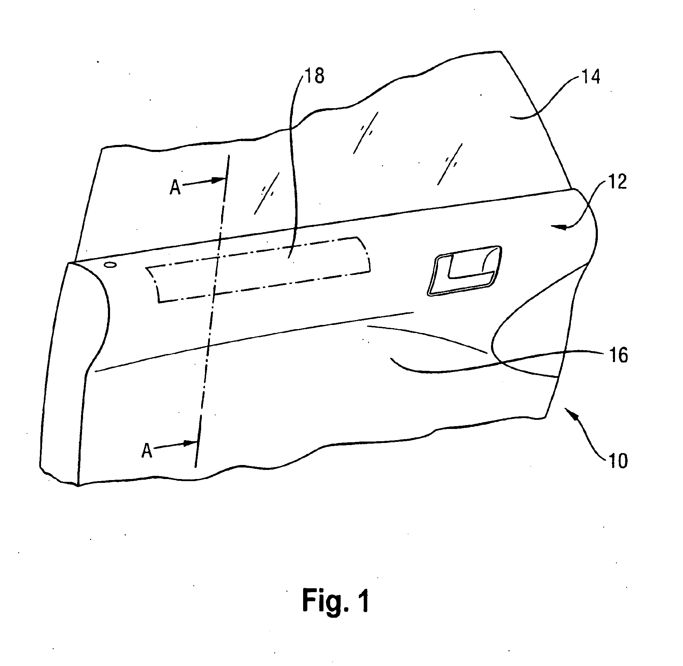

Fig. 1 zeigt den prinzipiellen Aufbau der Innenseite einer Fahrzeugtür. Die allgemein mit Referenzziffer 10 bezeichnete Fahrzeugtür ist dabei nur teilweise und insbesondere im Bereich der Bordkante 12 dargestellt, die den Bereich der Türverkleidung darstellt, der am nächsten der Seitenscheibe 14 liegt. Der Bereich der Bordkante ist hierbei derjenige Bereich, in dem sich der Übergang zwischen dem über der Armauflage (nicht dargestellt) angeordneten Mittelfeld 16 zu dem im Wesentlichen horizontal auf die Seitenscheibe 14 zulaufenden Abschlussbereich der Fahrzeugtürverkleidung befindet.

In der schematischen Darstellung der Fig. 1 ist der Anbringungsbereich 18 der Kopfaufprallschutzeinrichtung dargestellt. Es sollte aber deutlich sein, dass es sich hierbei nicht um eine von einem Fahrzeuginsassen erkennbare Position handelt. Die Kopfaufprallschutzeinrichtung nach der Erfindung ist für einen Fahrzeuginsassen nicht sichtbar. Die Darstellung in Fig. 1 wurde aber gewählt, um zum einen deutlich zu machen, dass sich der Austrittsbereich des Luftsackes nicht über die gesamte Länge der Fahrzeugtür erstreckt und zum anderen auch ausschließlich im Bereich der Bordkante 12 angeordnet ist. Im Mittelfeld 16 kann zusätzlich eine Seitenaufprallschutzeinrichtung vorgesehen sein, die allerdings nicht Gegenstand der Erfindung ist. Es soll ausschließlich eine Kopfaufprallschutzeinrichtung beschrieben werden, die zudem ausschließlich im Bereich der Bordkante 12 angeordnet ist.

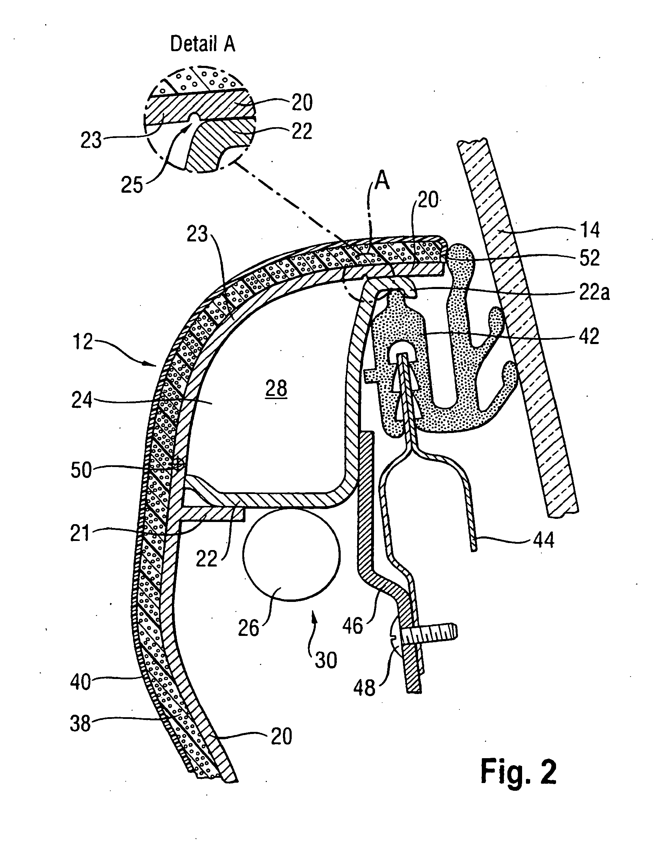

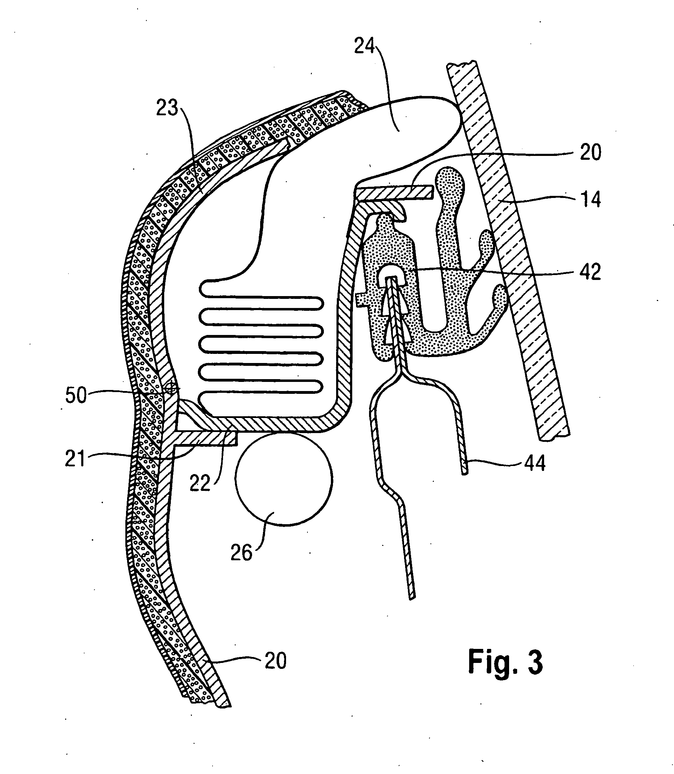

In den nachfolgenden Figuren 2 und 3 wird jeweils ein vertikaler Schnitt durch den Türaufbau gezeigt, der beispielsweise entlang der in Fig. 1 dargestellten Linie A-A verlaufen könnte. Alle nachfolgend beschriebenen Merkmale sind für jede Einstiegstür eines Kraftfahrzeuges in gleicher Weise anwendbar, d.h. nicht nur für die Fahrertür, sondern in gleicher Weise für die Beifahrertür oder die Türen im Fond.

In der Darstellung nach Fig. 2 ist der Bordkantenträger 20 dargestellt, der in der Schnittebene der Fig. 2 einen Befestigungsansatz 21 zur Befestigung der Kopfaufprallschutzeinrichtung 30 aufweist. Die Kopfaufprallschutzeinrichtung 30 besteht aus einem Airbagträger 22, einem Luftsack 24 und einem Gasgenerator 26, die jeweils zur Kopfaufprallschutzeinrichtung 30 zusammengefasst sind.

Sowohl der Bordkantenträger 20 wie auch Airbagträger 22 sind vorzugsweise Spritzgussteile, die z.B. aus ABS/PC bestehen können. Im dargestellten Überlappungsbereich zwischen Bordkantenträger 20 und Airbagträger 22 sind diese miteinander luftdicht verbunden, vorzugsweise verschweißt oder verklebt.

Der Airbagträger 22 weist eine erste Kammer 28 auf, die gasdicht gegen die Türaußenseite hin abgeschlossen ist. In der ersten Kammer 28 befindet sich der gefaltete Luftsack 24 (siehe Fig. 3). Am Airbagträger 22 ist der Gasgenerator 26 befestigt. Es kann jeglicher in der Technik übliche Gasgenerator 26 eingesetzt werden, der bezogen auf die benötigte Gasmenge und Entfaltungsgeschwindigkeit des Airbags das nötige Gasvolumen bereitstellt. Der Gasgenerator kann ebenso auch innerhalb der ersten Kammer 28 vorgesehen sein. Auf dem Bordkantenträger 20 befindet sich eine Schaumschicht 38, die z.B. aus PU-Schaum besteht. Den zur Fahrzeuginnenseite hin gerichteten Abschluss der Türverkleidung bildet eine auf der Schaumschicht 38 aufgebrachte Dekorschicht 40.

Wie weiterhin aus Fig. 2 ersichtlich ist, ist der Airbagträger mit einer Befestigungsnase 22a versehen, welche um eine Türdichtung 42 greift, welche wiederum auf dem aus Metall bestehenden Rohbau der Fahrzeugtür aufgesteckt ist. Somit ist der Airbagträger 22 auch gegen den Rohbau 44 fixiert, ohne dass es allerdings eines gesonderten Verfahrensschrittes zur Befestigung bedarf. Die entsprechende Fixierung erfolgt automatisch bei der Anbringung der Fahrzeugtürverkleidung.

Der Bordkantenträger 20 ist in dem Bereich, in dem der Airbagträger angebracht ist, durchgehend gestaltet, wobei dieser Bereich in der Darstellung nach Fig. 2 als Abdeckbereich 23 bezeichnet wird. Der Abdeckbereich 23 ist hierbei zwischen einem Bereich des Bordkantenträgers 20, der, wie anhand von Fig. 3 ersichtlich ist, als Drehachse 50 des Abdeckbereichs 23 bezeichnet werden kann sowie einer Materialschwächung 25 definiert, die am besten aus der Detailansicht A ersichtlich ist. Aus der Detailansicht A wird auch deutlich, dass der Abdeckbereich 23 kein separates Bauteil ist, sondern einstückiger Bestandteil des Bordkantenträgers 20 ist und lediglich als Teilbereich des Bordkantenträgers 20 dahingehend definiert ist, dass er sich zwischen funktionellen Bereichen befindet, die eine spezielle Wirkung im Falle der Auslösung der Kopfaufprallschutzeinrichtung besitzen. In der Schnittdarstellung nach Fig. 2 ist lediglich der als Drehachse dienende Bereich 50 wie auch die Materialschwächung 25 erkennbar. Um aber beim Auslösen und Entfalten des Luftsackes ein gezieltes Öffnen des Abdeckbereichs 23 zu ermöglichen, sind zusätzlich auch in der Schnittdarstellung der Fig. 2 nicht erkennbare, weitere Materialschwächungen vorgesehen, die sich im Bereich der Endpunkte der senkrecht zur Zeichenebene der Fig. 2 verlaufenden Materialschwächung 25 erstrecken und bis in den Bereich der Drehachse 50 verlaufen. Die in Fig. 1 schematisch angedeutete Position der Kopfaufprallschutzeinrichtung im Bereich der Bordkante könnte somit auch die Position der Achse 50 und parallel hierzu der Schwächung 25 sowie weiterer Materialschwächungsbereiche an den Endpunkten der Schwächung 25 darstellen, die sich wiederum bis in den Bereich der Achse 50 erstrecken und somit einen in der Darstellung nach Fig. 1 im Wesentlichen rechteckigen Bereich definieren, welcher dem Abdeckbereich 23 entspricht.

Die Materialschwächung 25 hat die Funktion, als Aufrisslinie eine gezielte Sollrissstelle darzustellen. Da die Materialschwächung 25 auf der der Schaumschicht 38 abgewandten Seite des Bordkantenträgers 20 angeordnet ist, lässt sich die Position dieser Schwächungsbereiche nicht für einen Fahrzeuginsassen erkennen.

Fig. 3 zeigt die Auslösung der Kopfaufprallschutzeinrichtung durch einen nicht dargestellten Sensor. Wie ersichtlich ist, entfaltet sich durch das vom Gasgenerator 26 abgegebene Gas der Luftsack 24, wobei sich die Schaumschicht 38 und die mit der Schaumschicht verbundene Dekorschicht 40 vom Abdeckbereich 23 abheben. Es bedarf keiner gesonderten Materialschwächung in der Schaumschicht 38 oder Dekorschicht 40, weil aufgrund der Elastizität der Schaumschicht sich diese durch den Druck des sich entfaltenden Luftsacks so verformt, dass der Luftsack in unmittelbarer Nähe der Seitenscheibe 14 und nach oben entfaltet werden kann. Der Airbagträger 22 wie auch Bordkantenträger 20 außerhalb des Abdeckbereichs 23 bleiben dabei an ihrer Position - es wird lediglich der Abdeckbereich 23 sowie die aus Schaumschicht und Dekorschicht bestehende Einheit so unter dem Druck des sich füllenden Luftsackes 24 verformt, dass dieser nach oben entsprechend seiner Funktion als Kopfaufprallschutzeinrichtung austreten kann.

Zur Erhöhung der Stabilität kann der Airbagträger 22 optional über eine an diesen fest angebrachte, z.B. angeschweißte oder angeklebte Lasche 46 mittels eines Verbindungselementes 48 fest mit dem Rohbau 44 verbunden sein. Als Verbindungselement 48 können Schrauben, aber auch Befestigungsklipse verwendet werden. Das Vorsehen der Lasche 46 ist aber nur optional zu sehen. Wesentlich ist, dass die Kopfaufprallschutzeinrichtung 30 als Teil der gesamten Fahrzeugtürverkleidung vormontiert werden kann und mit der Montage der Fahrzeugtürverkleidung in der Fahrzeugtür in einem Arbeitsgang angebracht werden kann.

Die Drehachse 50 kann durch eine gezielte Schwächung des Materials in diesem Bereich gebildet sein. Diese Schwächung wird vorzugsweise während der Produktion der Kopfaufprallschutzeinrichtung 30 werkzeugfallend hergestellt.

Beim Auslösen der Kopfaufprallschutzeinrichtung, d.h. beim Schuss des Headbagsystems, wird die Schaumschicht 38 im Bereich des Bordkantenträgers durchtrennt und zusätzlich die Dekorschicht 40, die in unmittelbarer Nähe zur Seitenscheibe 14 mit einem Umbug 52 versehen sein kann, durch den sich entfaltenden Luftsack 24 aus dem Umbug herausgezogen.

Im Bereich der Drehachse 50 kann ebenfalls eine Materialschwächung vorgesehen sein, dies muss aber nicht der Fall sein. Die Abstimmung zwischen dem Schwächungsbereich 25 und der Drehachse 50 muss auf alle Fälle so erfolgen, dass der Abdeckbereich 23 nicht im Bereich der Drehachse 50 reißt, da sich ansonsten die gewünschte und in Fig. 3 dargestellte Austrittsgeometrie des Luftsackes nicht realisieren lässt.

Ein Unterschied zwischen den Fig. 2 und 3 besteht dahingehend, dass in Fig. 3 die oben beschriebene Lasche 46 und Anbringung 48 am Rohbau 44 der Fahrzeugtür fortgelassen wurde. Dadurch soll deutlich gemacht werden, dass es sich um ein optionales Merkmal handelt und die aus Bordkante und dem Modul der Kopfaufprallschutzeinrichtung bestehende Baueinheit der Türverkleidung auch ohne eine derartige, zusätzliche Befestigung am Rohbau der Fahrzeugtür eingesetzt werden kann.

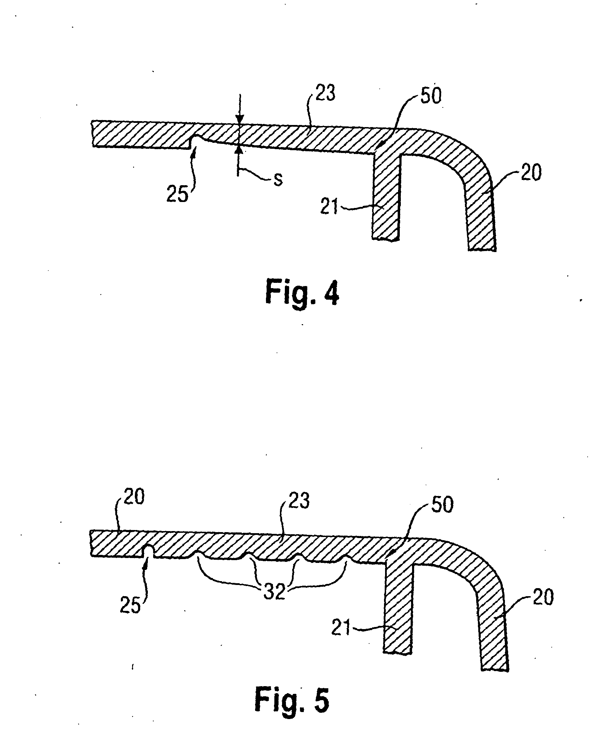

Bei den in den Fig. 4 und 5 dargestellten, alternativen Ausführungsformen der Erfindung ist jeweils nur der Abdeckbereich 23 des Bordkantenträgers 20 dargestellt. Bei der in Fig. 4 dargestellten Ausführungsform ist zudem schematisch der als Schusskanal wirkende Befestigungsansatz 21 dargestellt sowie die sich an den Abdeckbereich 23 anschließenden Bereiche des Bordkantenträgers 20. Bei der in Fig. 4 dargestellten Ausführungsform ist im Bereich der Drehachse keine Materialschwächung vorgesehen. Eine gezielte Materialschwächung ist hingegen im Bereich der Aufreißlinie 25 vorgesehen, die bei dem Entfalten des in den Zeichenebenen der Fig. 4 und 5 unter dem Abdeckbereich 23 angeordneten Luftsacks bricht und das Aufbiegen des Abdeckbereichs 23 nach oben erlaubt. Um ein gezieltes Biegeverhalten des Abdeckbereichs 23 zu ermöglichen, ist die Wandstärke s des Abdeckbereichs in Richtung auf die Aufreißlinie 25 zu kontinuierlich verringert. Wie oben bereits dargelegt wurde, ist die Aufreißlinie 25 bevorzugt U-förmig ausgestaltet. Die gezielte Verringerung der Wandstärke des Abdeckbereichs 23 erfolgt jedoch zwischen der imaginären Drehachse 50 und demjenigen Abschnitt der Aufreißlinie 25, der im Wesentlichen parallel zur imaginären Drehachse 50 angeordnet ist.

Die Materialverringerung, d.h. die Verringerung der Wandstärke s zwischen Drehachse 50 und dem hierzu parallel verlaufenden Abschnitt der Aufreißlinie 25 muss nicht linear sein. Das Wanddickenprofil des Abdeckbereichs 23 kann gezielt im Hinblick auf das gewünschte Biegeverhalten eingestellt werden.

Bei der in Fig. 5 dargestellten Ausführungsform der Erfindung, die ebenfalls nur schematisch anhand des Abdeckbereichs 23 in Anschluss an den Bordkantenträger 20 dargestellt ist, ist der Abdeckbereich 23 mit mehreren linienförmigen Schwächungsbereichen 32 versehen, die im Wesentlichen parallel zueinander verlaufen und parallel zur Drehachse 50 sind. Die linienförmigen Schwächungsbereiche 32 beeinflussen das Biegeverhalten des Abdeckbereichs in einer Weise, dass sich bei einer Druckbeaufschlagung durch den sich entfaltenden Luftsack der Abdeckbereich entlang der linienförmigen Schwächungen 32 verstärkt biegt und somit ein lamellenartiges nach oben Biegen das Abdeckbereichs möglich ist.

Bei den Ausführungsformen nach Fig. 4 und 5 sind die Aufreißlinie oder aber die linienförmigen Schwächungen jeweils auf der dem Luftsack zugewandten Seite des Abdeckbereichs 23 angeordnet. In beiden Figuren nicht dargestellt ist die über dem Bordkantenträger 20 wie auch Abdeckbereich 23 angeordnete Schaumschicht, die jeweils durch eine Dekorschicht abgeschlossen wird. Wie oben bereits erläutert wurde, reißt bei Auslösung der Kopfaufprallschutzeinrichtung der Schaum auf und lässt sich aufgrund seiner Elastizität gemeinsam mit der Dekorschicht verformen. Trotzdem muss bei der Berechnung und Konzeption der Profilierung und gezielten Materialschwächung des Abdeckbereichs 23 berücksichtigt werden, dass auch die über dem Abdeckbereich 23 angeordnete Schaumschicht einen gewissen Verformungswiderstand bietet.

Der Herstellungsablauf der Fahrzeugtürverkleidung beinhaltet, dass noch vor dem Aufbringen der Schaum- und Dekorschicht die gesamte , als Modul vorgesehene Kopfaufprallschutzeinrichtung an dem Bordkantenträger der Fahrzeugtürverkleidung befestigt wird und anschließend eine Haut auf den Bordkantenträger aufgeschäumt ist.

Die erfindungsgemäße Fahrzeuginnenverkleidung ist besonders variabel, da diese bereits mit einem vollständig vormontierten Modul der Kopfaufprallschutzeinrichtung versehen werden kann.

Bei allen dargestellten Ausführungsformen handelt es sich gezielt um einen auch als Headbag bezeichneten Luftsack zum Schutz des Kopfes eines Insassen, nicht um einen sogenannten Seitenaufprallschutz. Daher ist die Kopfaufprallschutzeinrichtung auch ausschließlich im Bordkantenträger, d.h. im obersten Bereich der Fahrzeugtürverkleidung angeordnet, wodurch sich beim Entfalten des Luftsackes eine sehr schnelle Ansprechzeit erzielen lässt und zum anderen auch das Volumen des Luftsackes geringer ausfallen kann als im Falle der Anbringung im Mittelfeld der Fahrzeugtürverkleidung.

## Patentansprüche

1. Fahrzeugtürverkleidung für ein Kraftfahrzeug mit einer Kopfaufprallschutzeinrichtung (30) für einen Fahrzeuginsassen, umfassend:
(a) eine Kopfaufprallschutzeinrichtung (30), die als Modul
(i) einen Airbagträger (22);
(ii) einen Luftsack (24), der randseitig am Airbagträger (22) luftdicht befestigt ist; und
(iii) einen Gasgenerator (26), der fest mit dem Airbagträger (22) verbunden ist, umfasst;
(b) einen Bordkantenträger (20), umfassend
(i) mindestens einen Befestigungsansatz (21) zur Befestigung der Kopfaufprallschutzeinrichtung (30) in einem Bereich in Montageposition der Fahrzeugtürverkleidung nahe der Seitenscheibe (14) der Fahrertür; und
(ii) einen Abdeckbereich (23), der die Kopfaufprallschutzeinrichtung (30) bedeckt;
(c) eine Schaumschicht (38) über dem Bordkantenträger (20, 23) ;
(d) eine Dekorschicht (40) auf der dem Bordkantenträger (20) abgewandten Seite der Schaumschicht (38); wobei
(e) die Schaumschicht (38) ausreichend elastisch ist, dass sie bei Auslösung der Kopfaufprallschutzeinrichtung (30) verformbar ist; und
(f) der Abdeckbereich (23) eine Materialschwächung (25) aufweist, die so gestaltet ist, dass bei Auslösung der Kopfaufprallschutzeinrichtung (30) der Abdeckbereich (23) im Bereich der Materialschwächung (25) aufreißt.
**dadurch gekennzeichnet, dass**
sich die Schaumschicht (38) durch den Druck des sich entfaltenden Luftsacks so verformt, dass der Luftsack in unmittelbarer Nähe der Seitenscheibe (14) und nach oben entfaltet werden kann.

2. Fahrzeugtürverkleidung nach Anspruch 1,
**dadurch gekennzeichnet, dass**
die Kopfaufprallschutzeinrichtung (30) mindestens eine Befestigungseinrichtung (22a; 46, 48) zum Herstellen einer Verbindung mit dem Rohbau (44) der Fahrzeugtür aufweist.

3. Fahrzeugtürverkleidung nach Anspruch 2,
**dadurch gekennzeichnet, dass**
die mindestens eine Befestigungseinrichtung (22a) im Montagezustand einen Teil der mit dem Rohbau (44) der Fahrzeugtür verbundenen Türdichtung (42) umgreift.

4. Fahrzeugtürverkleidung nach einem der vorhergehenden Ansprüche,
**dadurch gekennzeichnet, dass**
der Airbagträger (22) eine auf der von der Schaumschicht (38) entfernten Seite gasdicht abgeschlossene erste Kammer (28) aufweist, in welcher das gefaltete Gewebe des Luftsacks (24) angeordnet ist.

5. Fahrzeugtürverkleidung nach einem der vorhergehenden Ansprüche,
**dadurch gekennzeichnet, dass**
die Materialschwächung (25) eine Aufreißlinie darstellt, die im Wesentlichen U-förmig ist, wobei die Basis der U-Form in Montageposition im Wesentlichen parallel und nahe zur Seitenscheibe (14) der Fahrzeugtür verläuft und die beiden Schenkel der U-Form sich von Endbreichen der Basis der Aufreißlinie und im.Wesentlichen senkrecht zur Basis in einer Richtung von der Seitenscheibe (14) weg bis zu Endpunkten erstrecken.

6. Fahrzeugtürverkleidung nach Anspruch 5, weiter umfassend eine weitere gezielte Schwächung (50) der Wandstärke des Abdeckbereichs in einen Bereich, der sich im Wesentlichen zwischen den Endpunkten der Aufreißlinie (25) befindet.

7. Fahrzeugtürverkleidung nach einem der vorhergehenden Ansprüche,
**dadurch gekennzeichnet, dass**
die Materialschwächung (25, 50) werkzeugfallend gebildet ist.

8. Fahrzeugtürverkleidung nach einem der vorhergehenden Ansprüche,
**dadurch gekennzeichnet, dass**
die Materialschwächung (25) auf der der Schaumschicht abgewandten Seite des Bordkantenträgers (20) als örtliche Verringerung der Wandstärke des Bordkantenträgers (20) gebildet ist.

9. Fahrzeugtürverkleidung nach einem der vorhergehenden Ansprüche,
**dadurch gekennzeichnet, dass**
der einstückig mit dem Bordkantenträger (20) gebildete Abdeckbereich (23) eine Mehrzahl von linienförmigen Materialschwächungsbereichen (32) aufweist, die im Wesentlichen parallel zueinander verlaufen.

10. Fahrzeugtürverkleidung nach einem der vorhergehenden Ansprüche,
**dadurch gekennzeichnet, dass**
der einstückig mit dem Bordkantenträger (20) gebildete Abdeckbereich (23) eine Materialstärke (s) aufweist, die sich in Richtung auf zumindest einen Teil der eine Aufreißlinie darstellenden Materialschwächung (25) verringert.

11. Fahrzeugtürverkleidung nach einem der Ansprüche 1 bis 5,
**dadurch gekennzeichnet, dass**
die Materialschwächung gebildet ist, indem mindestens eine im Abdeckbereich (23) vorhandene Verstärkungslage, vorzugsweise aus Gewebe, sich nicht bis in den Bereich der Materialschwächung (25) erstreckt.

12. Fahrzeugtürverkleidung nach Anspruch 11,
**dadurch gekennzeichnet, dass**
mehrere Verstärkungslagen vorgesehen sind, die im Abdeckbereich (23) umspritzt sind, wobei das Biegeverhalten des Abdeckbereichs (23) durch die gezielte Erstreckung und Materialwahl der einzelnen Verstärkungslagen eingestellt ist.

13. Fahrzeugtürverkleidung nach einem der vorhergehenden Ansprüche,
**dadurch gekennzeichnet, dass**
der Bordkantenträger mindestens zwei, vorzugsweise drei oder vier Befestigungsansätze (21) aufweist, die einen Schusskanal für den Luftsack (24) bilden.

14. Fahrzeugtürverkleidung nach einem der vorhergehenden Ansprüche,
**dadurch gekennzeichnet, dass**
die Kopfaufprallschutzeinrichtung (30) so gestaltet ist, dass sie als vollständige Baueinheit bestehend aus dem Airbagträger (22), dem Luftsack (24) und dem Gasgenerator (26) in einem einzigen Arbeitsschritt am Bordkantenträger (20) anbringbar ist.

15. Fahrzeugtürverkleidung nach einem der vorhergehenden Ansprüche,
**dadurch gekennzeichnet, dass**
der Airbagträger (22) mit dem Bordkantenträger (20) verschweißt ist.

16. Fahrzeugtür mit einer Fahrzeugtürverkleidung nach einem der Ansprüche 1 bis 14,
**dadurch gekennzeichnet, dass**
der Airbagträger (22) mit dem Bordkantenträger (20) verklebt ist.

17. Fahrzeugtürverkleidung nach einem der Ansprüche 1-15,
**dadurch gekennzeichnet, dass**
die Dekorschicht (40) aus Kunststofffolie besteht.

18. Fahrzeugtür mit einer Fahrzeugtürverkleidung nach einem der Ansprüche 1 bis 15 und 17,
**dadurch gekennzeichnet, dass**
die Dekorschicht aus Leder, Lederimitat oder Textilmaterial besteht, das auf die Schaumschicht (38) aufgeklebt, aufkaschiert oder aufgespannt ist.

19. Fahrzeug mit mindestens einer Fahrzeugtür nach Anspruch 18.

20. Verfahren zur Vormontage einer Fahrzeugtürverkleidung nach einem der Ansprüche 1 bis 15 und 17, umfassend die Schritte:
(a) Montage einer Kopfaufprallschutzeinrichtung an dem Bordkantenträger der Fahrzeugtürverkleidung; und
(b) Hinterschäumen einer Haut auf den Bordkantenträger;

21. Verfahren nach Anspruch 20, wobei anstelle des Schrittes (b) folgende Schritte ausgeführt werden:
(b1) Erzeugen der Schaumschicht in einer geschlossenen Form; sowie in einem getrennten, nachfolgenden Schritt
(b2) Aufbringen, vorzugsweise aufkleben, aufkaschieren oder aufspannen der Dekorschicht auf die Schaumschicht.

## Claims

1. Vehicle door lining for a motor vehicle having a head-impact protection device (30) for a vehicle occupant comprising:
(a) a head-impact protection device (30) which comprises as a module
(i) an airbag support (22);
(ii) an airbag (24), which is fixed in airtight manner to the airbag support (22) on the edge side; and
(iii) a gas generator (26) which is connected firmly to the airbag support (22);
(b) a kerb support (20) comprising
(i) at least one fixing attachment (21) to fix the head-impact protection device (30) in one region in assembly position of the vehicle door lining close to the side window (14) of the driver's door; and
(ii) a cover region (23) which covers the head-impact protection device (30);
(c) a foam layer (38) over the kerb support (20, 23);
(d) a decorative layer (40) on the side of the foam layer (38) facing away from the kerb support (20); wherein
(e) the foam layer (38) is sufficiently resilient that it can be deformed when triggering the head-impact protection device (30); and
(f) the cover region (23) has a material weakening (25), which is designed so that when triggering the head-impact protection device (30), the cover region (23) tears open in the region of the material weakening (25),
**characterised in that** the foam layer (38) is deformed by the pressure of the unfolding airbag so that the airbag may be unfolded in the immediate vicinity of the side window (14) and upwards.

2. Vehicle door lining according to claim 1, **characterised in that** the head-impact protection device (30) has at least one fixing device (22a; 46, 48) for producing a connection with the shell (44) of the vehicle door.

3. Vehicle door lining according to claim 2, **characterised in that** the at least one fixing device (22a) engages one part of the door seal (42) connected to the shell (44) of the vehicle door in the assembly state.

4. Vehicle door lining according to one of the preceding claims, **characterised in that** the airbag support (22) has a first chamber (28) which is closed in gastight manner on the side remote from the foam layer (38), and in which the folded fabric of the airbag (24) is arranged.

5. Vehicle door lining according to one of the preceding claims, **characterised in that** the material weakening (25) is a tear-open line, which is essentially U-shaped, wherein the base of the U shape in assembly position runs essentially parallel and close to the side window (14) of the vehicle door and the two limbs of the U shape extend from end regions of the base of the tear-open line and essentially vertically to the base in a direction away from the side window (14) up to end points.

6. Vehicle door lining according to claim 5, also comprising a further specific weakening (50) of the wall thickness of the cover region in a region which is situated essentially between the end points of the tear-open line (25).

7. Vehicle door lining according to one of the preceding claims, **characterised in that** the material weakening (25, 50) is formed by moulding.

8. Vehicle door lining according to one of the preceding claims, **characterised in that** the material weakening (25) is formed on the side of the kerb support (20) facing away from the foam layer as a local reduction of the wall thickness of the kerb support (20).

9. Vehicle door lining according to one of the preceding claims, **characterised in that** the cover region (23) formed integrally with the kerb support (20) has a plurality of linear material weakening regions (32) which run essentially parallel to one another.

10. Vehicle door lining according to one of the preceding claims, **characterised in that** the cover region (23) formed integrally with the kerb support (20) has a material thickness (s) which is reduced in the direction of at least one part of the material weakening (25) representing a tear-open line.

11. Vehicle door lining according to one of claims 1 to 5, **characterised in that** the material weakening is formed by not extending at least one reinforcing layer, preferably made from fabric, present in the cover region (23) as far as the region of the material weakening (25).

12. Vehicle door lining according to claim 11, **characterised in that** several reinforcing layers are provided, which are injection-coated in the cover region (23), wherein the bending behaviour of the cover region (23) is adjusted by the specific extension and material selection of the individual reinforcing layers.

13. Vehicle door lining according to one of the preceding claims, **characterised in that** the kerb support has at least two, preferably three or four, fixing attachments (21) which form a firing channel for the airbag (24).

14. Vehicle door lining according to one of the preceding claims, **characterised in that** the head-impact protection device (30) is designed so that it can be attached to the kerb support (20) as a complete component consisting of the airbag support (22), the airbag (24) and the gas generator (26) in a single working step.

15. Vehicle door lining according to one of the preceding claims, **characterised in that** the airbag support (22) is heat-sealed to the kerb support (20).

16. Vehicle door having a vehicle door lining according to one of claims 1 to 14, **characterised in that** the airbag support (22) is adhered to the kerb support (20).

17. Vehicle door lining according to one of claims 1 to 15, **characterised in that** the decorative layer (40) consists of plastic film.

18. Vehicle door having a vehicle door lining according to one of claims 1 to 15 and 17, **characterised in that** the decorative layer consists of leather, imitation leather or textile material, which is adhered, laminated or mounted onto the foam layer (38).

19. Vehicle having at least one vehicle door according to claim 18.

20. Process for pre-assembly of a vehicle door lining according to one of claims 1 to 15 and 17, comprising the steps:
(a) assembly of a head-impact protection device on the kerb support of the vehicle door lining; and
(b) back-foaming a skin on the kerb support;

21. Process according to claim 20, wherein instead of step (b), the following steps are executed:
(b1) producing the foam layer in a closed mould; and in a separate subsequent step
(b2) attaching, preferably adhering, laminating or mounting the decorative layer onto the foam layer.

## Revendications

1. Revêtement de portière de véhicule, pour un véhicule automobile muni d'un dispositif de protection contre les chocs sur la tête (30) pour un passager de véhicule, comprenant :
(a) un dispositif de protection contre les chocs sur la tête (30), comprenant, sous forme de module :
(i) un support de sac gonflable de sécurité (22) ;
(ii) un sac à air (24), fixé en bordure, de façon étanche à l'air, sur le support de sac gonflable de sécurité (22) ; et
(iii) un générateur de gaz (26), relié rigidement au support de sac gonflable de sécurité (22) ;
(b) un support d'arête de bord (20), comprenant :
(i) au moins un appendice de fixation (21), pour la fixation du dispositif de protection contre les chocs sur la tête (30) dans une zone, en position de montage du revêtement de portière de véhicule, à proximité de la vitre latérale (14) de la portière de conducteur; et
(ii) une zone de recouvrement (23), couvrant le dispositif de protection contre les chocs sur la tête (30) ;
(c) une couche alvéolaire (38) au-dessus du support d'arête de bord (20, 23) ;
(d) une couche de décoration (40), sur la face, opposée au support d'arête de bord (20) de la couche alvéolaire (38) ; où
(e) la couche alvéolaire (38) est suffisamment élastique pour qu'elle soit déformable en cas de déclenchement du dispositif de protection contre les chocs sur la tête (30) ; et
(f) la zone de recouvrement (23) présente un affaiblissement du matériau (25), configuré de manière que, en cas de déclenchement du dispositif de protection contre les chocs sur la tête (30), la zone de recouvrement (23) s'ouvre par déchirement, dans la zone de l'affaiblissement du matériau (25),
**caractérisé en ce que**,
du fait de la pression du sac à air se déployant, la couche alvéolaire (38) se déforme, de manière que le sac à air puisse être déployé, à proximité immédiate de la vitre latérale (14) et vers le haut.

2. Revêtement de portière de véhicule selon la revendication 1, **caractérisé en ce que** le dispositif de protection contre les chocs sur la tête (30) présente au moins un dispositif de fixation (22a; 46, 48), pour établir une liaison avec la construction brute (44) de la portière de véhicule.

3. Revêtement de portière de véhicule selon la revendication 2, **caractérisé en ce que**, à l'état de montage, le au moins un dispositif de fixation (22a) entoure une partie du joint d'étanchéité de portière (42), relié à la construction brute (44) de la portière de véhicule.

4. Revêtement de portière de véhicule selon l'une des revendications précédentes, **caractérisé en ce que** le support de sac gonflable de sécurité (22) présente une première chambre (28), fermée de façon étanche aux gaz sur le côté éloigné de la couche alvéolaire (38), chambre dans laquelle est disposé le tissu plié du sac à air (24).

5. Revêtement de portière de véhicule selon l'une des revendications précédentes, **caractérisé en ce que** l'affaiblissement du matériau (25) constitue une ligne d'ouverture par déchirement, sensiblement en forme de U, la base de la forme en U, en position de montage, s'étendant sensiblement parallèlement et à proximité de la vitre latérale (14) de la portière de véhicule, et les deux branches de la forme en U s'étendant, depuis des zones d'extrémité de la base de la ligne d'ouverture par déchirement et sensiblement perpendiculairement à la base, dans une direction s'écartant de la vitre latérale (14), jusqu'à des points d'extrémité.

6. Revêtement de portière de véhicule selon la revendication 5, comprenant en outre un autre affaiblissement (50), à dessein, de l'épaisseur de paroi de la zone de recouvrement, dans une zone se trouvant sensiblement entre les points d'extrémité de la ligne d'ouverture par déchirement (25).

7. Revêtement de portière de véhicule selon l'une des revendications précédentes, **caractérisé en ce que** l'affaiblissement du matériau (25, 50) est formé par chute d'un outil.

8. Revêtement de portière de véhicule selon l'une des revendications précédentes, **caractérisé en ce que** l'affaiblissement du matériau (25) est formé sur le côté, opposé à la couche alvéolaire, du support d'arête de bord (20), sous forme de diminution locale de l'épaisseur de paroi du support d'arête de bord (20).

9. Revêtement de portière de véhicule selon l'une des revendications précédentes, **caractérisé en ce que** la zone de recouvrement (23), formée d'une seule pièce avec le support d'arête de bord (20), présente une pluralité de zones d'affaiblissement du matériau (32), s'étendant sensiblement parallèlement entre elles.

10. Revêtement de portière de véhicule selon l'une des revendications précédentes, **caractérisé en ce que** la zone de recouvrement (23), formée d'une seule pièce avec le support d'arête de bord (20), présente une épaisseur de matériau (s), diminuant en direction d'au moins une partie de l'affaiblissement du matériau (25) constituant une ligne d'ouverture par déchirement.

11. Revêtement de portière de véhicule selon lune des revendications 1 à 5, **caractérisé en ce que** l'affaiblissement du matériau est formé **en ce qu'**au moins une couche de renforcement, existant dans la zone de recouvrement (23), réalisée de préférence en tissu, ne s'étend pas jusque dans la zone de l'affaiblissement du matériau (25).

12. Revêtement de portière de véhicule selon la revendication 11, **caractérisé en ce que** sont prévues plusieurs couches de renforcement, enrobées par injection, dans la zone de recouvrement (23), le comportement en flexion de la zone de recouvrement (23) étant réglé par l'arrangement, à dessein, et le choix de matériau des différentes couches de renforcement.

13. Revêtement de portière de véhicule selon l'une des revendications précédentes, **caractérisé en ce que** le support d'arête de bord présente au moins deux, de préférence trois ou quatre appendices de fixation (21), formant un canal de tir pour le sac à air (24).

14. Revêtement de portière de véhicule selon l'une des revendications précédentes, **caractérisé en ce que** le dispositif de protection contre les chocs sur la tête (30) est configuré de manière à pouvoir être monté, en une étape opératoire unique, sur le support d'arête de bord (20), sous forme d'ensemble de construction complet, composé du support de sac gonflable de sécurité (22), du sac à air (24) et du générateur de gaz (26).

15. Revêtement de portière de véhicule selon l'une des revendications précédentes, **caractérisé en ce que** le support de sac gonflable de sécurité (22) est soudé au support d'arête de bord (20).

16. Portière de véhicule, avec un revêtement de portière de véhicule selon l'une des revendications 1 à 14, **caractérisé en ce que** le support de sac gonflable de sécurité (22) est collé au support d'arête de bord (20).

17. Portière de véhicule, avec un revêtement de portière de véhicule selon l'une des revendications 1 à 15, **caractérisé en ce que** la couche de décoration (40) est composée d'une feuille de matière synthétique.

18. Portière de véhicule, avec un revêtement de portière de véhicule selon l'une des revendications 1 à 15 et 17, **caractérisé en ce que** la couche de décoration est composée de cuir, d'imitation cuir, ou de matériau textile, appliqué sur la couche alvéolaire (38) par collage, scellage ou application d'une tension mécanique.

19. Véhicule, comprenant au moins une portière de véhicule selon la revendication 18.

20. Procédé de pré-montage d'un revêtement de portière de véhicule selon l'une des revendications 1 à 15 et 17, comprenant les étapes de :
(a) montage d'un dispositif de protection contre les chocs sur la tête sur le support d'arête de bord du revêtement de portière de véhicule ; et
(b) moussage sur la face postérieure d'une peau sur le support d'arête de bord.

21. Procédé selon la revendication 20, où, au lieu de l'étape (b), les étapes suivantes sont exécutées :
(b1) production de la couche alvéolaire en une forme fermée ; ainsi que, en une étape subséquente, séparée ;
(b2) application, de préférence application par collage, scellage ou application d'une tension mécanique, de la couche de décoration sur la couche alvéolaire.
